Europäisches Patentamt

European Patent Office

Office européen des brevets

(19)

(11) Publication number: **0 337 583 B1**

## EUROPEAN PATENT SPECIFICATION

(12)

(45) Date of publication of patent specification: **26.05.93**  (51) Int. Cl.5: **G05D 1/06**

(21) Application number: **89201314.5**

(22) Date of filing: **18.12.85**

(60) Publication number of the earlier application in accordance with Art.76 EPC: **0 229 197**

(54) **Aircraft wind shear detection, warning and correction system.**

(43) Date of publication of application:
**18.10.89 Bulletin 89/42**

(45) Publication of the grant of the patent:
**26.05.93 Bulletin 93/21**

(84) Designated Contracting States:
**DE FR GB IT NL**

(56) References cited:
**EP-A- 0 125 087**
**DE-A- 2 752 201**
**US-A- 4 319 219**

(73) Proprietor: **THE BOEING COMPANY**
**P.O. Box 3707 M.S. 7E-25**
**Seattle Washington 98124-2207(US)**

(72) Inventor: **Schultz, Larry Roger**
**30048 - 107th Place S.E.**
**Auburn, WA 98002(US)**
Inventor: **Super, Peter Jude**
**29919 - 108th Avenue S.E.**
**Auburn, WA 98002(US)**
Inventor: **Van Leynseele, Francis Jacques**
**20416 - 80th Avenue West**
**Edmonds, WA 98020(US)**

(74) Representative: **Hoijtink, Reinoud et al**
**OCTROOIBUREAU ARNOLD & SIEDSMA**
**Sweelinckplein 1**
**NL-2517 GK Den Haag (NL)**

EP 0 337 583 B1

# Description

## BACKGROUND OF THE INVENTION

The present invention pertains to the aircraft flight control art and, more particularly, to a means for enhancing flight operation in the presence of wind shear. A wind shear detection, warning and correction system as described in the preamble of claim 1 is known from EP − A − 0 125 087.

Takeoff or approach maneuvers under wind shear conditions significantly increase the complexity of proper aircraft flight. To aid the pilot during wind shear conditions, several flight control systems have been developed in the prior art. These systems have taken the form of wind shear detectors, which simply annunciate the condition of wind shear, or flight control systems which guide the pilot through wind shear.

Prior flight control systems have exhibited shortcomings in that they fail to provide one or more of the following features:

- a command and display system which may be easily integrated into existing aircraft;
- a continuous system for approach, takeoff and go − around;
- vertical compensation as well as horizontal compensation for thrust modulation used on approach;
- two levels of warning to alert the pilot of moderate and severe wind shear, which levels are dependent upon available performance in the event a go − around is required; and
- a go − around pitch command utilizing optimal performance of the airplane.

## SUMMARY OF THE INVENTION

It is an object of this invention, therefore, to provide an improved aircraft flight command system which is particularly adapted for indicating and controlling flight through wind shear, by producing a two − level warning signal in response to detecting that the aircraft is flying in a performance − limiting wind shear condition. This is achieved according to the invention by the features as described in the characterizing part of claim 1.

## BRIEF DESCRIPTION OF THE DRAWINGS

FIGURE 1 is a block diagram illustrating the approach command control system, the wind shear warning and annunciating system according to the invention, and the go − around/takeoff pitch command system; and

FIGURE 2 is a detailed block diagram illustrating the preferred embodiment of the wind shear detecting and annunciating system as shown in FIGURE 1.

## DETAILED DESCRIPTION OF THE PREFERRED EMBODIMENTS OF THE INVENTION

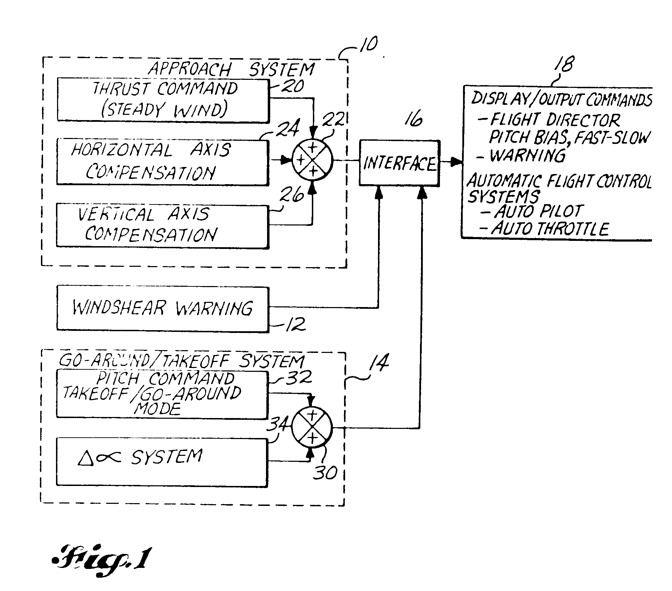

FIGURE 1 is block diagram illustrating the subsystem components to the overall aircraft flight command and display system. The subsystems include an approach system 10, a wind shear warning system 12 and a go − around/takeoff system 14. These systems 10, 12 and 14, as is described hereinbelow, provide control and/or annunciating information through an interface device 16 to the aircraft display and output command systems 18. The displays include the conventional flight director as well as oral or visual warning indicators. Command signals from the subsystems 10, 12 and 14 may, also, be routed directly to conventional automatic flight control systems including the autopilot and autothrottle.

The approach system 10 provides a thrust command signal for guiding the aircraft during an approach maneuver. The approach system 10 includes apparatus 20 which produces a thrust command signal appropriate to guide the aircraft during an approach maneuver, which signal assumes a steady ambient wind condition. Added to this signal, in an adder 22, are the outputs from horizontal axis compensating means 24 and vertical axis compensating means 26. The horizontal and vertical compensating means 24, 26, respectively, produce error signals corresponding to the deviation of the aircraft from its desired approach profile. These deviations are normally the result of wind effects such as wind shear. By providing a thrust correction signal to compensate for both horizontal and vertical deviations, it has been found that the present system provides significantly improved approach profile control over prior systems using only horizontal axis compensation.

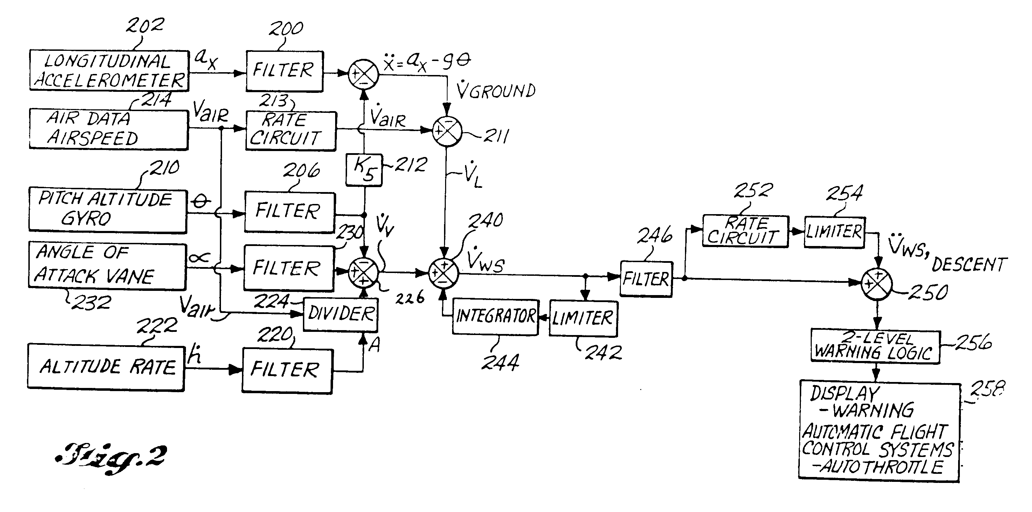

The wind shear warning system 12, in a manner more fully described with respect to FIGURE 2, detects the presence of ambient wind shear or high turbulence. A two − level warning is provided. Thus, a first level indicates to the flight deck that the aircraft is in a wind shear but that the aircraft is fully capable of continuing on the approach maneuver. In the second level warning, the flight deck is advised that the wind shear is severe to the point that a go − around maneuver is advised.

The go − around/takeoff system 14 provides an output pitch command signal for control of the aircraft during a go − around or takeoff maneuver. This pitch command signal is produced as the sum, in summer 30, of a pitch command signal produced by the pitch command takeoff/go − around mode means 32 and the $\Delta\alpha$ means 34. Pitch

command means 32 produces an output com – manded angle of attack signal which is pre – pro – grammed as a function of flap position and engine condition. The means $\Delta\alpha$ 34 produces a correction angle of attack signal, which correction signal is a programmed function of altitude and altitude loss. The $\Delta\alpha$ system produces the signal such that, at lower altitudes, less altitude loss is permitted. Thus, the go – around/takeoff system 14 provides an output pitch command signal which safely and precisely guides the aircraft in its go – around, or takeoff maneuver, particularly during wind shear conditions.

FIGURE 2 is a detailed block diagram of the wind shear detecting and warning system 12, as shown in FIGURE 1.

This system detects the condition of wind shear by monitoring both longitudinal and vertical axes components of wind velocity. The longitudinal component is determined by noise filtering, in filter 200, the longitudinal acceleration signal $a_x$ provided by a conventional longitudinal accelerometer 202. Acceleration effects due to aircraft pitch are sub – tracted at combiner 204 by noise filtering, at 206, the output signal $\theta$ from the pitch attitude gyro 210, and multiplying the filtered signal by a gain factor $K_5$, at amplifier 212 where $K_5$ is selected to be equal to the acceleration due to gravity, g.

Thus, the output from combiner 204 is the longitudinal acceleration signal $\ddot{X} = \dot{V}_{ground}$ which is equal to $a_x - g\theta$.

The $\dot{V}_{ground}$ signal is subtracted, at combiner 211, from a signal $\dot{V}_{air}$, which signal is derived by taking the first time differential, in rate circuit 213, of the $V_{air}$ signal provided by a conventional air data airspeed means 214.

The output from combiner 211 is, therefore, a signal $\dot{V}_L$ which is representative of the longitudinal component of wind acceleration.

The vertical component of wind is determined by noise filtering, at 220, the altitude rate signal $\dot{h}$, as provided by conventional altitude rate sensing means 222. The filtered signal $\dot{h}$ is divided by the signal $V_{air}$, as provided by air data airspeed means 214, in a divider 224.

The output from divider 224 is applied as one input to combiner 226.

Also applied as inputs to combiner 226 are the pitch attitude gyro signal $\theta$, as filtered through filter 206, and a signal $\alpha$, as noise filtered through filter 230, which is provided by a conventional angle of attack vane 232.

The combiner 226 sums the various input sig – nals in the sense indicated to produce a signal $\dot{V}_V$ which is representative of the vertical component of ambient wind, i.e.

$$\dot{V}_V = g[(\theta - \alpha) - (\dot{h}/V_{air})].$$

The longitudinal and vertical wind component signals $\dot{V}_L$, $\dot{V}_V$, respectively, are summed in a combiner 240 to produce a resultant wind shear signal $\dot{V}_{WS}$. Also applied, as an input to combiner 240, in the negative sense, is a limited, in limiter 242, and integrated, in integrater 244, form of the signal $\dot{V}_{WS}$, which acts as a washout filter to elimi – nate steady state error signals which may be present in the system.

The total wind shear signal $\dot{V}_{WS}$ is filtered by filter 246 to separate random turbulence from wind shear.

The output from filter 246 is passed both to a combiner 250 and to the input of a rate circuit 252. Rate circuit 252 takes the first time differential of the signal out of filter 246. A limiter 254 passes only that portion of the signal produced by the rate circuit 252 which corresponds to a negative, or descent, component, $\ddot{V}_{WS}$, descent. Thus, the out – put from combiner 250 is a signal which is the sum of the total wind shear measurement $\dot{V}_{WS}$ and a component representing rate of change of $\dot{V}_{WS}$ in the descent direction.

This resultant signal is sent to a two – level warning logic system 256. The two – level warning logic system 256 responds to the warning signal produced by the combiner 250 to produce a first, or "yellow" warning annunciation in the event that the warning signal exceeds a first predetermined level. This first level corresponds to a wind shear condition which is high but within the capabilities of the aircraft to continue its landing maneuver. In the event that the warning signal provided by combiner 250 exceeds a second predetermined level, cor – responding to a wind shear condition which would tax the capabilities of the aircraft, a "red" warning is given indicating the need for a go – around ma – neuver.

The warning logic signals provided by logic 256 are passed to the flight deck warning systems and, if necessary, to the automatic flight control systems, such as the autothrottle control, as in – dicated at block 258.

The system of FIGURE 2, therefore, deter – mines the total ambient wind shear component by summing longitudinal and vertical wind shear components. A warning signal is developed, using both the wind shear signal and descent rate of change of the wind shear measurement. This warning signal is passed to a two – level warning logic block which indicates the severity of the wind shear compared to the capabilities of the aircraft.

In summary, an aircraft wind shear detection, warning and correction system has been described in detail. The system includes a wind shear de – tecting and indicating means which produces a two – level warning signal in response to detecting that the aircraft is flying in a wind shear condition. In addition, a thrust command means controls aircraft thrust on an approach maneuver to compensate for both horizontal and vertical wind components encountered by the aircraft. A pitch command means operates during a go – around or takeoff maneuver to produce a pitch command signal adapted to produce optimum aircraft climb, taking into account aircraft altitude.

## Claims

1. An aircraft wind shear detection, warning and correction system comprising:

    wind shear detecting and indicating means (12) for producing a warning signal at two different levels of wind shear in response to detecting that the aircraft is flying in a wind shear condition;

    thrust command means (10), operable during an aircraft approach maneuver, for producing a thrust command signal adapted to control aircraft thrust to compensate for aircraft deviations from both a horizontal and a vertical predetermined approach profile; and

    pitch command means (14), operable in aircraft go – around and takeoff maneuvers, for producing a pitch command signal adapted to produce optimum aircraft climb in a wind shear condition;

    characterized in that the wind shear detecting and indicating means comprises:

    means (206, 210, 214, 220, 222, 224, 226, 230, 232) for producing a signal $\dot{V}_V$ representative of the vertical component of wind acceleration in accordance with:

$$\dot{V}_V = \left[ (\theta - \alpha) - \frac{\dot{h}}{V_{air}} \right] g,$$

where:

    $\theta$ =    pitch angle,
    $\alpha$ =    angle of attack,
    $\dot{h}$ =    altitude rate,
    $V_{air}$ =    airspeed;
    $g$ =    acceleration due to gravity, and

    means (240) for summing said $\dot{V}_V$ signal and a conventionally derived signal $\dot{V}_L$ representative of the horizontal component of wind accelaration to produce a total wind shear signal $\dot{V}_{WS}$.

2. The system of claim 1 wherein the wind shear detecting and indicating means further comprise:

    means (252, 254) for processing said wind shear signal $\dot{V}_{WS}$ and producing a signal

$$\ddot{V}_{WS,descent}$$

representative of the rate of change of $\dot{V}_{WS}$ in the descent direction; and

    means (250) for summing said $\dot{V}_{WS}$ and

$$\ddot{V}_{WS,descent}$$

signals to produce a wind shear warning signal.

3. The system of claim 2 wherein the wind shear detecting and indicating means further comprise:

    warning logic means (256) for processing said warning signal at two different levels of wind shear and producing:

    said first level warning indication responsive to said signal exceeding a first predetermined level, said first predetermined level being selected to correspond to a high but acceptable – for – landing wind shear level; and

    said second level warning indication responsive to said signal exceeding a second predetermined level, said second predetermined level being selected to correspond to a wind shear level dictating an aircraft go – around maneuver.

## Patentansprüche

1. Windscherungs – Ermittlungs –, – Warn – und – Korrektursystem, mit

    – einer Windscherungs – Ermittlungs – und – Anzeigeeinrichtung (12) zum Erzeugen eines Warnsignals bei zwei unterschiedlichen Pegeln der Windscherung in Abhängigkeit von der Ermittlung, daß das Flugzeug in einem Windscherungs – zustand fliegt;

    – einer Schub – Steuereinrichtung (10), die während eines Flugzeugs – Anflugmanövers betreibbar ist, um ein Schub – Steuersignal zu erzeugen, das dazu eingerichtet ist, den Flugzeugschub so zu steuern, daß ein Ausgleich für die Flugzeugabweichungen von einem sowohl horizontalen als auch einem vertikalen, vorbestimmten Anflugprofil kompensiert werden; und

    – einer Neigungs – Leiteinrichtung (14), die bei den Durchstart – und Startmanövern des Flugzeugs betreibbar ist, um ein Neigungs–Leitsignal zu erzeugen, das dazu eingerichtet ist, in einem Wind–scherzustand einen optimalen Flug–zeuganstieg zu erzeugen; dadurch **gekennzeichnet,** daß die Windscherungs–Ermittlungs– und –Anzeigeeinrichtung die folgenden Merkmale aufweist:

– eine Einrichtung (206, 210, 214, 220, 222, 224, 226, 230, 232) zum Erzeugen eines Signals $\dot{V}_V$, das repräsentativ ist für die Vertikalkomponente der Windbe–schleunigung, und zwar in Übereinstim–mung mit:

$$\dot{V}_V = [\theta - \alpha) - \frac{\dot{h}}{V_{Luft}}]g,$$

wobei:

$\theta$ =
Neigungswinkel,
$\alpha$ =
Anstellwinkel,
$\dot{h}$ =
Steig– bzw. Sinkgeschwindigkeit,
$V_{Luft}$ =
Luftgeschwindigkeit,
$g$ =
Schwerkraftbeschleunigung, und

eine Einrichtung (240) zur Aufsum–mierung des genannten $\dot{V}_V$–Signals und eines in herkömmlicher Weise abgelei–teten Signals $\dot{V}_L$, das repräsentativ ist für die Horizontalkomponente der Windbeschleunigung, um ein Gesamt–Windscherungs–Signal $\dot{V}_{WS}$ zu erzeu–gen.

2. System nach Anspruch 1, worin die Windscherungs–Ermittlungs– und –Anzeigeeinrichtung ferner die folgenden Merkmale aufweist:

– eine Einrichtung (252, 254) zum verar–beiten des genannten Windscherungssi–gnales $V_{WS}$ und zum Erzeugen eines Signals $\ddot{V}_{WS-Abstieg}$, das repräsentativ ist für die Geschwindigkeit der Änderung von $\dot{V}_{WS}$ in Abstiegrichtung; und

eine Einrichtung (250) zum Aufsum–mieren der genannten Signale $\dot{V}_{WS}$ und $\ddot{V}_{WS-Abstieg}$, um ein Windscherungs–Warnsignal zu erzeugen.

3. System nach Anspruch 2, worin die Windscherungs–Ermittlungs– und –

Anzeigeeinrichtung ferner die folgenden Merkmale aufweist:

– eine logische Warneinrichtung (256) zum Verarbeiten des genannten Warnsignals bei zwei unterschiedlichen Pegeln der Windscherung und zum Erzeugen:

– der genannten Warnanzeige für einen ersten Pegel, die auf das Signal anspricht, wenn es einen ersten vorbestimmten Pegel überschreitet, wobei der erste vorbestimmte Pegel so ausgewählt wird, daß er einem hohen Windscherungspegel entspricht, der für die Ladung aber noch akzeptabel ist; und

– der genannten Warnanzeige für einen zweiten Pegel, die auf das Signal anspricht, wenn es einen zweiten vorbestimmten Pegel überschreitet, wobei der genannte zweite vorbestimmte Pegel so ausgewählt wird, daß er einem Windscherungspegel entspricht, der ein Flugzeug–Durchstartmanöver erfordert.

**Revendications**

1. Ensemble de détection, d'avertissement et de correction de gradient de vent d'aéronef, comprenant :

un dispositif détecteur et indicateur (12) de gradient de vent, destiné à créer un signal d'avertissement à deux niveaux différents de gradient de vent à la suite de la détection du fait que l'aéronef vole dans une condition de gradient de vent,

un dispositif (10) de commande de poussée, destiné à fonctionner pendant une manoeuvre d'approche de l'aéronef et à créer un signal de commande de poussée destiné au réglage de la poussée de l'aéronef pour la compensation des écarts de l'aéronef par rapport à un profil prédéterminé d'approche à la fois horizontal et vertical, et

un dispositif (14) de commande de tangage, destiné à fonctionner pendant les manoeuvres de décollage et de rotation d'attente et à créer un signal de commande de tangage destiné à la production d'une montée optimale de l'aéronef dans une condition de gradient de vent,

caractérisé en ce que le dispositif détecteur et indicateur de gradient de vent comprend :

un dispositif (206, 210, 214, 220, 222, 224, 226, 230, 232) destiné à produire un signal $\dot{V}_V$ représentatif de la composante verticale d'accélération du vent suivant la relation :

$$\dot{V}_V = [(\theta - \alpha) - (\dot{h}/V_{air})]g$$

$\theta$ étant l'angle de tangage, $\alpha$ l'angle d'attaque, $\dot{h}$ la vitesse de variation d'altitude, $V_{air}$ la vitesse aérodynamique, et g l'accélération de la pesanteur, et

un dispositif (240) destiné à ajouter le signal $\dot{V}_V$ et un signal $\dot{V}_L$ représentatifs de la composante horizontale d'accélération du vent, dérivée de manière classique, afin qu'il forme un signal de gradient total de vent $\dot{V}_{WS}$.

2. Ensemble selon la revendication 1, dans lequel le dispositif détecteur et indicateur de gradient de vent comporte en outre :

un dispositif (252, 254) destiné à traiter le signal de gradient de vent $\dot{V}_{WS}$ et à créer un signal $\ddot{V}_{WS,descente}$ représentatif de la vitesse de variation de $\dot{V}_{WS}$ dans le sens de descente, et

un dispositif (250) destiné à ajouter les signaux $\dot{V}_{WS}$ et $\ddot{V}_{WS,descente,}$ pour la création d'un signal d'avertissement de gradient de vent.

3. Ensemble selon la revendication 2, dans lequel le dispositif détecteur et indicateur de gradient de vent comporte en outre :

un dispositif logique d'avertissement (256) destiné à traiter le signal d'avertissement à deux niveaux différents de gradient de vent et à créer :

l'indication d'avertissement du premier niveau lorsque le signal dépasse un premier niveau prédéterminé, ce premier niveau prédéterminé étant sélectionné afin qu'il corresponde à un niveau élevé de gradient de vent, mais qui est acceptable pour un atterrissage, et

l'indication d'avertissement du second niveau lorsque le signal dépasse un second niveau prédéterminé, ce second niveau prédéterminé étant sélectionné afin qu'il corresponde à un niveau de gradient de vent qui impose une manoeuvre de rotation d'attente de l'aéronef.

Fig.1

7

EP 0 337 583 B1

202 — LONGITUDINAL ACCELEROMETER

$a_X$

200 — FILTER

$\ddot{x} = a_X - g\theta$

$\dot{V}_{GROUND}$

214 — AIR DATA AIRSPEED

$V_{AIR}$

213 — RATE CIRCUIT

$\dot{V}_{AIR}$

211

$\dot{V}_L$

212 — $K_5$

210 — PITCH ALTITUDE GYRO

$\theta$

206 — FILTER

232 — ANGLE OF ATTACK VANE

$\propto$

FILTER

230

$\dot{V}_V$

$V_{AIR}$

224 — DIVIDER

$A$

222 — ALTITUDE RATE

$\dot{h}$

220 — FILTER

226

240

$\dot{V}_{WS}$

INTEGRATOR — 244

LIMITER — 242

246 — FILTER

252 — RATE CIRCUIT

254 — LIMITER

$\ddot{V}_{WS,DESCENT}$

250

256 — 2-LEVEL WARNING LOGIC

258 — DISPLAY -WARNING AUTOMATIC FLIGHT CONTROL SYSTEMS -AUTOTHROTTLE

Fig.2